# EUROPEAN PATENT SPECIFICATION

(11) **EP 1 877 651 B1**
(45) Date of publication and mention of the grant of the patent: **22.04.2015**
(21) Application number: 05809152.1
(22) Date of filing: 29.11.2005
(51) Int. Cl.: F01N 3/022

(54) **FILTER DEVICE FOR REMOVING PARTICLES FROM EXHAUST GAS**
FILTERVORRICHTUNG ZUM ENTFERNEN VON TEILCHEN AUS ABGAS
DISPOSITIF DE FILTRAGE POUR L'ELIMINATION DE PARTICULES DE GAZ D'ECHAPPEMENT

(30) Priority: 29.11.2004 DK 200401856
(43) Date of publication of application: 16.01.2008
(73) Proprietor: DEUTZ Aktiengesellschaft, 51149 Köln (DE)
(72) Inventor: STOBBE, Per, DK-2840 Holte (DK); HOFFSCHMIDT, Bernhard, D-51467 Bergish Gladbach (DE)
(86) International application number: PCT/DK2005/000767
(87) International publication number: WO 2006/056211

(56) References cited:
- EP-A1- 1 128 031
- WO-A1-2005/033477
- WO-A1-2006/040474
- DE-U1- 8 806 321
- DE-U1- 8 806 321
- US-A- 5 019 142
- US-A- 5 853 438

## Description

### Field of the invention

Filter devices for removing particles from exhaust gas and comprising a filter body having a plurality of longitudinal, substantially parallel extending channels defined by porous particle retaining, but gas permeable walls. Such filter devices are particular useful for the removal of soot and other particles from exhaust gas discharged from internal combustion engines, especially diesel engines.

The diesel engine invented in the 1890ties by Rudolf Diesel has over the last 30 years received more and more attention due to emission of large amounts of harmful particulate substances. In particular soot particles have been addressed for causing cancer.

Many technical attempts for improving the engines performance have been designed typically also reduced the emission outlet. Though the world society has decided with USA, EU and Japan as the driving forces to demand filters mounted in the exhaust systems of motor vehicles in order to almost fully eliminate particulate emission.

This invention is focusing on the issue of solving the problem with ash coming form the lubrication oil, additives, etc accumulation by the filter and resulting in limited lifetime of such a filter.

### Background of the invention

Since the Cordierite based Wall Flow Filter (WFF) was introduced in the mid 1980ties numerous test and works have been performed resulting in thousands of scientific articles and patents. The only two manufactures to mass produce such WFF are:
- Coming Inc. in USA
- NGK Ltd. from Japan
both supplying more or less identical products for the automobile industry.

In general the problems of the ceramic WFF was until late 1990ties based primarily on the wrong material choice. Cordierite with melting temperature around 1350°C combined with its very low thermal conductivity of less than 1 W/m°K. Having serious problems in surviving the often experienced so called uncontrolled regeneration. Which happens when a larger than system designed amount of soot is exposed for the right temperature, Oxygen content in the gas and time duration in the DPF. The dramatic exothermic reaction creates temperatures easily exceeding 1350°C within thermally isolated areas of the DPF, which then melts and reduce the filtering efficiency from above 95% to near zero.

From mid 1990ties new materials was introduced for the increasing demand for durable DPF such as:
- advanced metal alloys like those from companies Purem, Baekert, Sumitumo,
- non-oxide ceramics like Silicon Carbide made by the companies Ibiden, NGK, NoTox, LiqTech, Saint-Gobain

So far only SiC ceramics has seen broad acceptance for the automobile industry. Either from being mounted from the manufacturer or as a retro-fit application. The dominant example is the French Ibiden plant supplying several hundred of thousand of 0144 mm DPF per year to French automobile manufactures.

One important issue to address is the limited space and weight capacity available on any vehicle. Which limit the filter principle to very compact structures. The most popular is the honeycomb design, which has gained acceptance broadly in the industry. A huge number of small channels are arranged in parallel separated by porous walls. When each second channel is closed in one end in such a design that the incoming particulate loaded gas is trapped in said channel. The gas pressure will force the gas through the porous wall into a clean outlet channel, which is open in the other end. Widely know as a Wall Flow Filter.

The basic problems in solving the particle emission problem from the Diesel engine can be grouped like:
∘ separating the mixed soot and ash particles from the exhaust fluid
∘ removing daily the soot, carbon particles from the filter sequentially - called regeneration
∘ cleaning the DPF form the over long time accumulated ash, un-organic metal oxides - called maintenance cleaning

Separating the particles is a relative simple technique. All the problems arise from the daily regeneration and by the ash build up causing limited use.

Several problems seen from the engine should be addressed. Primarily the backpressure any filter, exhaust system or other device mounted in the exhaust gas stream will cause. Increasing the backpressure will cause the engine to decrease the thermal efficiency resulting in higher emissions outlet and increased fuel consumption.

For practical application the ash deposit in the filter is of decisive importance. With increasing mileage of the vehicle an increasing amount of ash is accumulated in the filter. In case of additive based regeneration technologies the major part of the ash accumulated originates from the fuel additive non-organic metal oxides.

Ash storage capacity based on 0.4 liter/1000 km will over 150,000 miles or 230,000 km range in volume between 3,5 and 7,5 litre depending on the ash density and type of vehicle. Reference made to SAE 2003-01-0378. In either case the filter surface area to keep the backpressure at modest level as to the layer of ash is app 50 litre for a honeycomb. Way beyond practical acceptance from the auto industry.

Published investigation on the calculation of pressure drop of Diesel Particulate Filters, DPF involves the contribution of substrate, soot, channel flow friction, initial effect of the channel inlet and outlet and the ash deposits. In general the pressure drop over a DPF should not exceed 0.75 Bar (750 mBar) at its maximum when mounted in an automobile and not exceed 0.25 Bar on heavyduty vehicles. Various sources have reported that the pressure drop in the WFF during ordinary city drive cycle can increase with 150% for each 150,000 km driven. In practice this demand either a very long DPF or complete exchange for perhaps every 300,000 km being undesirable for most application.

Reference is further made to SAE article 2004-01-0158 by Gerd Gaiser from company Eberspaecher GmbH in Germany and SAE article 890405 by Athanasious Konstandopoulos from CPERI in Greece.

### Prior art

The present invention addresses the problem of ash accumulation of the extruded ceramic honeycomb trap. Though the problem is similar in other DPF design and material choices.

Reference is made to Deutches Patent Offenlegungsschrift DE 103 43 046 A1. Where a similar principle of such a device is described though without solving issue of a method of production.

Reference is made to US 4,781,831 and US 6,126,833 both from CeraMem describing a cross-flow-filter device with conduits made in a very long honeycomb monolith (like 30 - 60 inch long) for passing permeate liquid flow out our of the internals of the body. Characterized by the conduits are cut with several cell distance or even as much as 10 cells between the conduits. The principle is depending on the fact that the fluid is transported longitudinal inside the walls of several cells and not passing one wall transversely.

Reference is made to US 6,723,262 from NGK with conduits made right after the die head while the body is in motion passing through the die head or during the extrusion process and hereby also before drying of the specifically a in par spe mentioned "solid-liquid separation filter" which differs significantly from a gas filter device as described in the present invention.

### Reference is made to DE 8806321 describing a filter body with alveolar channels.

In a typical WFF all the particles has their maximum speed entering the inlet channel. The fluid speed is decreasing along the inlet channel with length typically from 150 until 350 mm. And vice versa in the corresponding outlet channel where the fluid speed is highest at the outlet end or volume.

In case of fuel additive additives the oxidizing additive components are deposited during the loading phase together with the soot in a common layer on the filtering surface. During the following regeneration the soot within this common layer is oxidized leaving the ash as a loose porous structure. At the same time the additive change structure and loose their mechanical stability and by pulsation be moved further along the inlet channel to its end creating a dense plug.

In case of lubrication oil additives, the limited amount of emitted particles will by their inertia end up in the "dead end" of the channel being accumulated and over time reducing the effective length of the channel. This effect is determining the lifetime of the WFF and very undesired by both filter manufactures, but in specific the vehicle manufactures.

DPF shaped as the WFF has over the years shown commercialization only through extrusion where the ceramic raw material in a plastically stage is forced by high pressure though a die shaping the somewhat soft paste into the desired shape. After drying, cutting to length, channel closing and appropriate firing the present WFF is created and ready for installation. And as to this one field of the present invention is facing the honeycomb.

### Summary of the invention

A filter device for removing particles from exhaust gas and comprising a filter body having a plurality of longitudinal, substantially parallel extending channels defined by porous particle retaining, but gas permeable walls, a portion of which channels has a free passageway at each end of each channel, the other portion is closed at each end of each channel, which is characterized in that the closed end channels are combined in groups in each of which the channels communicate freely with each others and with an outer surface or discharge duct of the filter body through at least one conduit penetrating the walls of the closed end channels in said group.

Preferred embodiments of the invention are defined in the claims

The present invention allows the particles in the exhaust gas stream to pass with no restriction along the inlet channel - and most important past the inlet channels open end! The filtered gas is gently forced by the engines pumping work in a 90° degree angle through the porous wall to the exit channel leaving the particles "flowing" in the inlet channel until they pass the filter body for being accumulated in a volume outside the filter body. Hereby the DPF obtain its original backpressure throughout the lifetime of the installation. Accumulated ash outside the DPF should be stored for sufficient deposit at either sequential removal or after the lifetime of the installation.

The base material of the powder technology honeycomb filter body is preferably ceramic particles, and will normally have an average mean particle size in the range of 1-250 µm, such as in the range of 10-150 µm, preferably in the range of 30-100 µm, giving filters with pore sizes ranging from 10-200 µm, preferably 20-100 µm or such as 40-80 µm.

If SiC is to be used, 12 commercial grades of SiC are presently the preferred starting products for producing the porous Silicon Carbide elements, such as Mesh 40, 60, 80, 120, 150, 180, 220, 280, 320, 360, 400, 600 (according to the FEPA standards).

Production methods normally employ continuous barrel/auger extrusion, but also other commonly known ceramic shaping processes, such as tape-casting, iso-static casting, slip-casting and other casing methods may be used.
The presently preferred manufacturing method of the filter bodies is extrusion and sintering of a paste comprising particles of a ceramic and/or metallic material, a permanent binder, one or more green binders and liquids.

The present invention takes the approach that the emitted particles has some mass and inertia, which either by passing down through the inlet channel of the WFF or by the pulsation from the engine transport them from a short time deposit along the inside of the inlet channels to a final deposit reservoir further down the channels - since the inlet channels according to the present invention are open also in the opposite ends the particles will pass through the inlet channels and not be deposited on the inlet channel walls.

This desired effect is obtained by combining the well known WFF technique with the cross-flow-filter (CFF) technique - two techniques from different technical worlds never combined before. The cross-flow-filters are used widely in the liquid filter industries for separation or concentration purposes, e.g. when separating bacteria and viruses from milk, clarifying beer, etc., for which purposes a general pressure difference of 3-10 Bar and a mass flow volumes of few m3/hour are acceptable. Such pressures and flow capabilities are, however, totally unacceptable in an exhaust system for a combustion engine. Important differences are:
∘ a different viscosity of the fluids
∘ a mass difference of 1:800 between air and most liquids.

The present invention does not pass permeate/clean fluid along the inside of the walls of a filter body like the CFF, but in open channels parallel with the filter body length and perpendicular through the filtering walls of the body and differs thus significantly from the disclosure of US patent 6,126,833 describing a cross-flow filtering device for fluids.

The parallel placed outlet channels in the honeycomb design are identical to the inlet channels, but closed in each end. Somewhere along the circumference of the filter device a suitable amount of slots are performed in order to make correspondence for the cleaned fluid to pass from the many outlet channels to the outer volume. The slots make an opening, passage in the walls combining the outlet channels. The slots are easily cut after drying of the somewhat soft green stage ceramic honeycomb, but before the channel end closing procedure.

All WFF type honeycomb filter devise know in the literature and the industry has the inlet and outlet in opposite ends and on the same centre line. The present invention change this practice and exit the gas though slots in the WFF filter body circumference in an angle between 45 and 135 degree of the body centre line, typically with a 90 degree angle.

The exit area (slot) from each one row of channels will typically be of the same width as the channel and have a length from 2-100 times the width, preferably 5-50 times the length.

### Detailed description of the invention

The invention will now be further described with reference to the drawings, wherein:
Fig. 1 shows an axial section of the principal design of the filter device according to a preferred embodiment of the invention.
Fig. 2 shows an axial longitudinal section of the filter body in the filter device shown in Fig. 1, said filter body having rows of inlet channels with free passageways in both ends and rows of outlet channels closed in both ends.
Figs. 3A and 3B show end views of filter bodies according to the invention having internal channels with different cross-sectional shape.
Fig. 4 shows a cross section of another filter body according to the invention made of a number of pre-formed wave shaped thin porous plates stacked upon each other creating longitudinal channels in the filter body.
Fig. 5 shows a photo of an embodiment of an extruded filter body according to the invention.

### Detailed description of the drawings

The fully open inlet channels with no closing blocks in either end with porous channel walls for passing the fluid to the outlet channel with closing blocks in each end and the slot connecting a row of outlet channels preferably one slot on each side of the body to the volume for exit. At he very end of the body a preferred volume will store the particles passing through the open inlet channels.

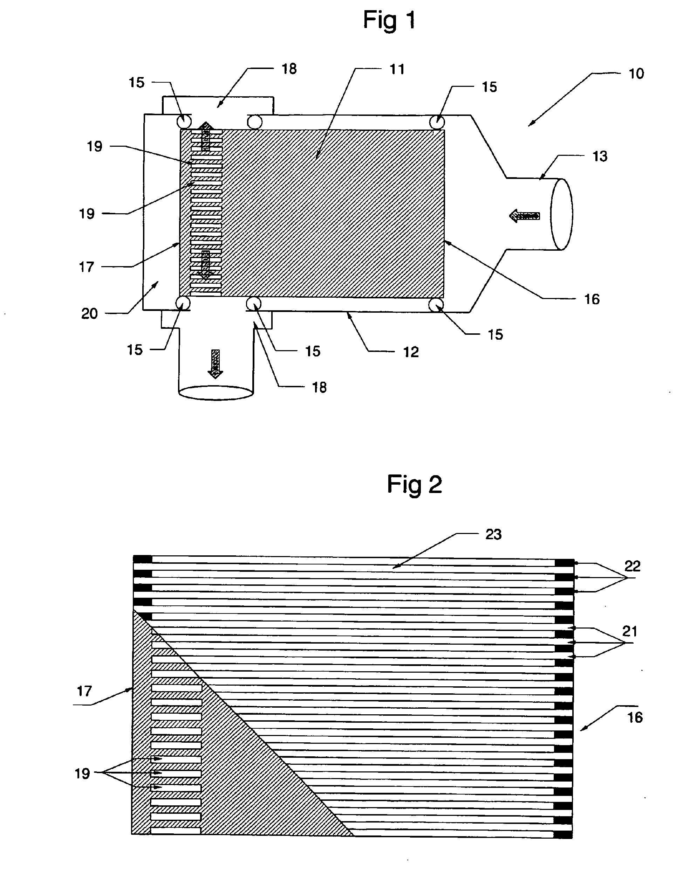

The filter body 11 in the overall principal design of the preferred filter device embodiment shown Fig. 1 is mounted inside a sheet metal canister 12 having an inlet tube 13 and an outlet tube 14 as part of an exhaust system of a vehicle equipped with a combustion engine. The filter body 11 is gas sealed and mechanically secured inside the canister with several heat resistant seals 15, which also separate the inlet 16 from the outlet 17. A ring shaped discharge channel 18 being a part of the canister surrounds the slot openings 19 connecting the filter body outlet slots to the outlet tube 14. The particle loaded exhaust gas, to be filtered, enters the filter body at the inlet end face 16 via the many fully open inlet channels having no closing blocks at the opposite ends as in traditional WFF diesel filters. Inlet and outlet channels are separated by porous walls, which pass the gas to outlet channels with closing channel blocks in each end. The outlet channels collecting the cleaned gas is internally connected through the body with transversely going slots connecting a row of outlet channels preferably with one open slots on both side of the body to the sheet metal collecting volume for the exhaust gas to exit. At the outlet end face 17 of the filter body there is a preferably closed reservoir 20 to store the particles passing axially through the filter body along inside of the inlet channels.

The filter body shown in Fig. 2, partly in longitudinal section, has an inlet end face 16 with open inlet channels 21 without any closing blocks in the opposite ends 17 and outlet channels 22 closed at both ends 16, 17. The inlet and outlet channels are separated by porous walls 23, through which the exhaust gas passes to outlet channels having closing channel blocks in each end. The filtered clean gas is collected in the outlet channels and passed through the body transversely (perpendicular to the paper plane) by a conduit connecting a row of outlet channels and debouching in slots 19 on preferably opposite sides of the filter body into the ring shaped discharge channel of the metal sheet exhaust cannister.

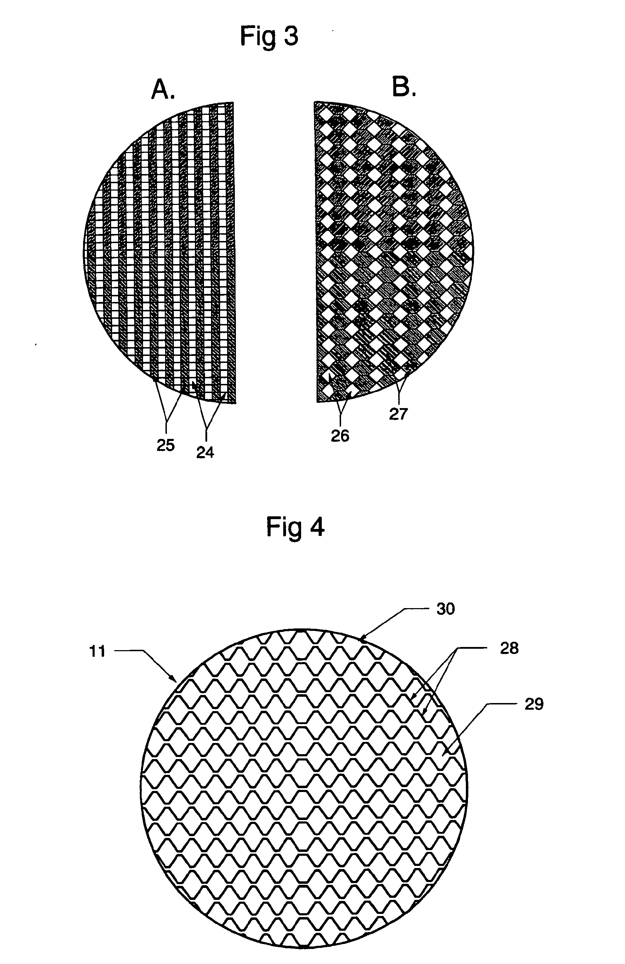

The two different channel configurations of the filter body princip shown in Figs. 3A and 3B represent both inlet and outlet end faces. Only one half-circle of the end faces of a honeycomb filter body is shown. In 3A inlet and outlet square shaped channels are arranged in rows 24 of open inlet square channels and rows 25 of closed outlet channels.

3B depicts one half-circle of the outlet (or inlet) end face of another honeycomb filter body having combined rows 26 of square inlet channels and rows 27 of hexagonal outlet channels for optimization of the active porous wall gas passing area.

Referring to Fig. 4 a cross section of another filter body is shown, assembled from a number of pre-formed wave shaped thin porous plates 28 stacked upon each other creating channels 29 longitudinal (perpendicular to the paper plane) of the filter body. Along the outside 30 of the filter body 11 the plates are welded together or to a shell in order to insure tightness towards the outer environment. However, according to the present invention the plates do not need to be welded internally along each individual channels as the function of the channel configuration is different compared to the standard WFF. Many inlet channels share with the present sheet configuration the same two wall sheet to the neighbor outlet channels. Only welding along the outer side is necessary in order to make a tight separation between inlet and outlet channels.

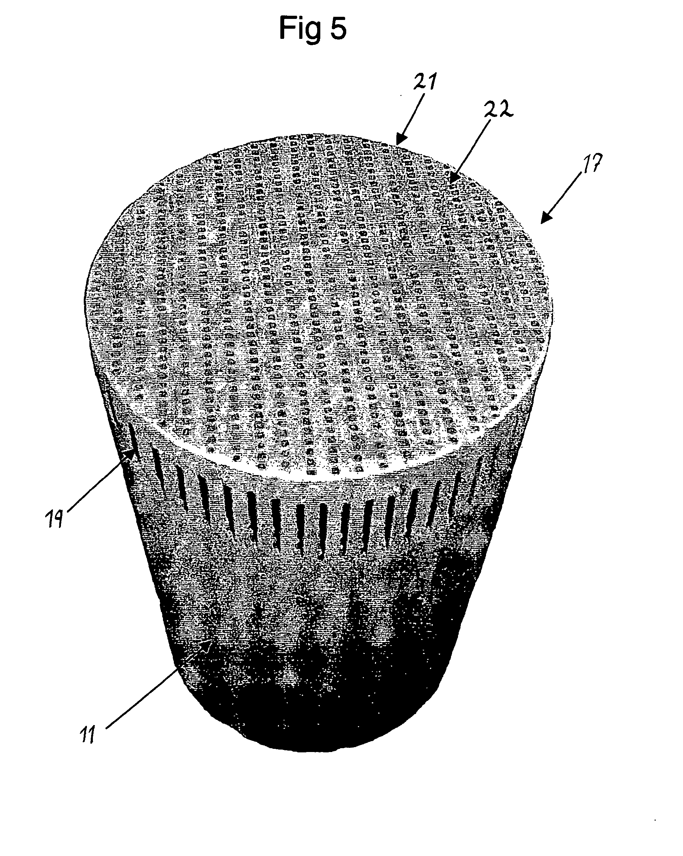

Fig. 5 shows a photo of an embodiment of an extruded filter body according to the invention.

### Description of preferred embodiments

Example 1 concerns a Wall Flow Filter produced with a bi-modal SiC powder technology having a very controlled grain size. And are hereby characterised by an extremed homogeneous and controlled pore size and pore size distribution. A prefered pore size measured to be ~25 µm, gives a filtration efficiency measured to be higher than 85% suitable as a diesel engine soot filter. Pore sizes could if preferred be selected in the range of 15 - 30 µm.
The high strength is obtained as the result of the ultra fine (FCP-15 powder from Saint Gobain with D50 grain size 0.6 µm) SiC powder evaporating at the very high sintering temperature >2300°C and condensing in the grain contact points between the larger grains (like F-180 with D50 grain size 69 µm). The structure by this method becomes a pure porous SiC honeycomb body.
Other combination of powders for the bi-modal principle could also be selected like FCP-C with D50 grain size 13 µm and FCP-F with D50 grain size 1 µm all from Saint Gobain.
The extruded WFF filter construction has a matrix of thin, interconnected walls, which define a multiplicity of square (or other shape) cells, which have interconnected open pores of very controlled size. The porosity is high and sufficient to enable the fluid to flow completely through the thin walls in their narrow dimensions, between adjoining cells and through the thin walls in their longer dimensions between adjoining or neighbouring cells and to restrict the particles in the gas from flowing through the filter body. Each inlet channel are open in both ends and neighbouring outlet channels are closed in both ends, forming a pattern with lines of either closed or open cels, generating a WFF.
In the prestent example the filter device is a 118 mm diameter honeycomb structure with app 1440 total cells. -720 cells defined as inlet cells and 720 defined as outlet cells having a length of 220 mm. Cell size was 2 x 2 mm and wall thickness 0.8 mm. The 0.6 mm wide and 30 mm long slots was cut manually and the openings created by this technique closed with a 10 mm deep block of ceramic material similar to the wall material. Also the inlet and outlet channels to be closed was closed maually with ceramic material similar to the wall material. With preferance such slots, conduits for a gas filtering device may be cut by an automation device.

The properties of the SiC (Silicon Carbide) based filter material are characterised by an extremely high thermal conductivity (10 to 30 W/m²K), giving a thermal shock resistance three times greater than that of Cordierite filters. SiC decomposing point was found to be around 700°C higher than melting point for Cordierite (1300°C). Expansion of SiC was measured to be ~4 x 10⁻⁶ m/K.

Example 2 concerns a Wall Flow Filter produced with a bi-modal SiC powder technology having a very controlled grain size. And are hereby characterised by an extremely homogeneous and controlled pore size and pore size distribution. A prefered pore size measured to be -45 µm, gives a filtration efficiency measured to be higher than 75% suitable as a diesel engine soot filter. Pore sizes could if preferred be selected in the range of 25 - 50 µm.
The medium mechanical strength is obtained as the result of the ultra fine (FCP-15 powder from Saint Gobain with D50 grain size 0.6 µm) SiC powder evaporating at the very high sintering temperature >2300°C and condensing in the grain contact points between the larger grains (like F-120 with D50 grain size 109 µm). The structure by this method becomes a pure high strength porous SiC honeycomb body with good permeabiliy.

Example 3 concerns an example where the Wall Flow Filter produced is not by a bi-modal model. But based on the use of only one type of SiC powders (like FCP-7 from Saint Gobain) formed with an organic binder to WFF bodies and which during controlled high temperature firing in protective gas re-crystallize controlled so the hereby created expanding and larger grain extending all through the body creates pores of more or less identical size 1-3 times the size of the raw SiC particles. It is known that Ibiden Ltd of Japan use this technology for manufacturing of DPF.

Example 4 concerns a Wall Flow Filter produced from the ceramics material Cordierite which has the primare advantage over SiC that the raw material price is considerably lower and firing cost is significant lower as to the less complicated furnace equipment and needed temperature.

The above procedures and examples may be altered according to usual practice by the person skilled in the art without extending beyond the scope of the invention as defined in the attached claims.

A preferred embodiment of the invention comprises a method of forming a non collecting diesel engine exhaust particle loaded gas filter for separating said particles from the particle loaded gas by separating mechanically the particles by passing said particle loaded gas through the body with porous walls arranged in a structural design which comprises:
∘ one or more than one extruded body (ies) of ceramic porous material more than in total 100 parallel passageways extending longitudinal from the fluid inlet end to the opposite end of the filter body
∘ the fluid inlet passageways each with more than 0.5 mm² cross section is open in both the gas inlet end and the opposite end
∘ the fluid outlet passageways is closed in both ends of the passageways
∘ the inlet passageways and the outlet passageways are separated by a single porous wall
∘ engine generated exhaust overpressure drives the fluid though the porous filtering wall between the inlet and the outlet passageways
∘ the filtered fluid corresponds freely inside the outlet passageways with the outlet conduit channels perpendicular to the filter body
∘ the filtered fluid exit the filter body through the conduit channels in the circumference of the body in an angle between 45 and 135 degree to the body centre line into an external collection zone
the particles to be separated from the fluid is collected outside the filter body in the particle collection zone in the opposite end of the fluid inlet end.

The herein presented filtering principle according to the invention could also be foreseen to be used for separating particles in general filtering applications as well as hot gas filtering applications.

## Claims

1. A filter device for removing particles from exhaust gas and comprising a filter body (11) having a plurality of longitudinal, substantially parallel extending channels defined by porous particle retaining, but gas permeable walls (23), a portion of which channels has a free passageway at each end of each channel (21), the other portion is closed at each end of each channel (22), the closed end channels (22) being combined in groups (25) in each of which the channels communicate freely with each others and with an outer surface or discharge duct of the filter body (11) through at least one conduit penetrating the walls of the closed end channels (22) in said group, **characterized in that** more than in total 100 parallel passageways extend longitudinal from the fluid inlet end (16) to the opposite end (17) of the filter body, the filter body being combined with and sealed to a reservoir (20) in which outlet ends (17) of the channels having free passageways debouch.

2. A filter device according to claim 2, **characterized in that** said reservoir (20) is closed.

3. A filter device according to claim 1, **characterized in that** each channel in cross section is either triangular, quadrilateral, square, rectangular, hexagonal, or octagonal.

4. A filter device according to claim 1 or 2, **characterized in that** the filter body (11) in cross section has a shape like a honeycomb with a channel or cell density of from 0.1 to 500 cpsi (channels or cells per square inch), preferably 50 and 300 cpsi.

5. A filter device according to any of the preceding claims, **characterized in that** the porosity of the channel walls (23) is between 10 and 90 %, preferably between 35 and 85 %.

6. A filter device according to any of the preceding claims, **characterized in that** the thickness of the channel walls (23) is between 0.2 and 15 mm, preferably between 0.2 and 2 mm.

7. A filter device according to any of the preceding claims, **characterized in that** the width of each channel is between 0.5 and 50 mm, preferably between 1 and 5 mm.

8. A filter device according to any of the preceding claims, **characterized in that** the freely communicating groups are prepared before drying the extruded filter body (11).

9. A filter device according to claim 1, **characterized in that** the freely communicating groups are prepared after drying the extruded filter body (11).

10. A filter device according to any of the preceding claims, **characterized in that** the filter body (11) is made of non-oxide ceramics like silicon carbide or silicon nitride, optionally combined with silicon metal.

11. A filter device according to any of the claims 1 - 8, **characterized in that** the filter body (11) is made of oxide ceramics like cordierite, alumina, titanate or mullite.

12. A filter device according to any of the claims 1 - 6, **characterized in that** the filter body (11) is made of metal alloys, preferably ferrum optionally containing nickel and/or aluminium and/or chromium and/or possible rare earth metals.

13. A filter device according to any of the preceding claims, **characterized in that** the filter body (11) is combined with a cyclone.

14. An internal combustion engine provided with at least one filter device according to any of the preceding claims for removing soot and other particles from its exhaust gas.

15. An internal combustion engine according to claim 15, wherein said engine is a diesel engine.

16. A vehicle provided with an internal combustion engine according to any of claims 15 or 16.

17. A method of forming a non-collecting diesel engine exhaust particle loaded gas filter for separating said particles from the particle loaded gas by separating mechanically the particles by passing said particle loaded gas through the body (11) with porous walls (23) arranged in a structural design which comprises:
∘ fluid inlet passageways, fluid outlet passageways
∘ one or more than one extruded body (ies) of ceramic porous material more than in total 100 parallel passageways extending longitudinal from the fluid inlet end (16) to the opposite end of the filter body (11)
∘ the fluid inlet passageways each with more than 0.5 mm² cross section is open in both the gas inlet end (16) and the opposite end
o the fluid outlet passageways is closed in both ends of the passageways
o the inlet passageways and the outlet passageways are separated by a single porous wall (23)
∘ engine generated exhaust overpressure drives the fluid though the porous filtering wall (23) between the inlet and the outlet passageways
∘ the filtered fluid corresponds freely inside the outlet passageways with the outlet conduit channels perpendicular to the filter body (11)
∘ the filtered fluid exit the filter body (11) through the conduit channels in the circumference of the body in an angle between 45 and 135 degree to the body centre line into an external collection zone
the particles to be separated from the fluid is collected outside the filter body (11) in the particle collection zone (20) in the opposite end (17) of the fluid inlet end (16).

## Patentansprüche

1. Filtervorrichtung zum Entfernen von Partikeln aus Abgas, einen Filterkörper (11) umfassend, der mehrere längsgerichtete, im Wesentlichen parallel verlaufende Kanäle aufweist, die durch poröse partikelzurückhaltende, aber gasdurchlässige Wände (23) definiert sind, wobei ein Teil der Kanäle an jedem Ende jedes Kanals (21) einen freien Durchlassweg aufweist und der andere Teil an jedem Ende des Kanals (22) geschlossen ist, wobei die Kanäle mit geschlossenem Ende (22) zu Gruppen (25) kombiniert sind, in denen sich die Kanäle jeweils frei miteinander und mit einer Außenfläche oder einem Ablassgang des Filterkörpers (11) über mindestens eine Leitung austauschen, welche die Wände der Kanäle mit geschlossenem Ende (22) in der Gruppe durchdringt, **dadurch gekennzeichnet, dass** vom Fluideinlassende (16) ausgehend insgesamt mehr als 100 parallele Durchlasswege längsgerichtet zum entgegengesetzten Ende (17) der Filterkörpers verlaufen, wobei der Filterkörper mit einem Behälter (20) kombiniert und daran abgedichtet angeschlossen ist, in dem Auslassenden (17) der Kanäle mit freien Durchlasswegen ihren Verlauf nehmen.

2. Filtervorrichtung nach Anspruch 1, **dadurch gekennzeichnet, dass** der Behälter (20) geschlossen ist.

3. Filtervorrichtung nach Anspruch 1, **dadurch gekennzeichnet, dass** jeder Kanal im Querschnitt entweder dreieckig, vierseitig, quadratisch, rechteckig, sechseckig oder achteckig ist.

4. Filtervorrichtung nach Anspruch 1 oder 2, **dadurch gekennzeichnet, dass** der Filterkörper (11) im Querschnitt eine Form ähnlich einer Wabe mit einer Kanal- oder Zelldichte von 0,1 bis 500 cpsi (Kanäle oder Zellen pro Quadratinch) aufweist, vorzugsweise 50 bis 300 cpsi.

5. Filtervorrichtung nach einem der vorhergehenden Ansprüche, **dadurch gekennzeichnet, dass** die Porosität der Kanalwände (23) zwischen 10 und 90 % beträgt, vorzugsweise zwischen 35 und 85 %.

6. Filtervorrichtung nach einem der vorhergehenden Ansprüche, **dadurch gekennzeichnet, dass** die Dicke der Kanalwände (23) zwischen 0,2 und 15 mm beträgt, vorzugsweise zwischen 0,2 und 2 mm.

7. Filtervorrichtung nach einem der vorhergehenden Ansprüche, **dadurch gekennzeichnet, dass** die Weite jedes Kanals zwischen 0,5 und 50 mm beträgt, vorzugsweise zwischen 1 und 5 mm.

8. Filtervorrichtung nach einem der vorhergehenden Ansprüche, **dadurch gekennzeichnet, dass** die sich frei austauschenden Gruppen vor dem Trocknen des extrudierten Filterkörpers (11) hergestellt werden.

9. Filtervorrichtung nach Anspruch 1, **dadurch gekennzeichnet, dass** die sich frei austauschenden Gruppen nach dem Trocknen des extrudierten Filterkörpers (11) hergestellt werden.

10. Filtervorrichtung nach einem der vorhergehenden Ansprüche, **dadurch gekennzeichnet, dass** der Filterkörper (11) aus nicht oxidischen Keramiken, wie Siliziumcarbid oder Siliziumnitrid, besteht, die optional mit Siliziummetall kombiniert sind.

11. Filtervorrichtung nach einem der Ansprüche 1 bis 8, **dadurch gekennzeichnet, dass** der Filterkörper (11) aus oxidischen Keramiken, wie Cordierit, Aluminiumoxid, Titanat oder Mullit, besteht.

12. Filtervorrichtung nach einem der Ansprüche 1 bis 6, **dadurch gekennzeichnet, dass** der Filterkörper (11) aus Metalllegierungen besteht, vorzugsweise aus Eisen, das optional Nickel und/oder Aluminium und/oder Chrom und/oder eventuell Seltenerdmetalle enthält.

13. Filtervorrichtung nach einem der vorhergehenden Ansprüche, **dadurch gekennzeichnet, dass** der Filterkörper (11) mit einer Wirbelkammer kombiniert ist.

14. Verbrennungsmotor, der mit mindestens einer Filtervorrichtung nach einem der vorhergehenden Ansprüche zum Entfernen von Ruß und anderen Partikeln aus seinem Abgas ausgestattet ist.

15. Verbrennungsmotor nach Anspruch 14, wobei der Motor ein Dieselmotor ist.

16. Fahrzeug, das mit einem Verbrennungsmotor nach einem der Ansprüche 14 oder 15 ausgestattet ist.

17. Verfahren zum Bilden eines nicht sammelnden Gasfilters für partikelbelastetes Abgas aus einem Dieselmotor zum Abscheiden der Partikel aus dem partikelbelasteten Gas durch mechanisches Abscheiden der Partikel durch Hindurchleiten des partikelbelasteten Gases durch den Körper (11) mit porösen Wänden (23), die in einer Strukturgestaltung angeordnet sind, die Folgendes umfasst:
Fluideinlasswege, Fluidauslasswege,
einen oder mehr als einen extrudierten Körper aus porösem Keramikmaterial, wobei vom Fluideinlassende (16) ausgehend insgesamt mehr als 100 parallele Durchlasswege längsgerichtet zum entgegengesetzten Ende des Filterkörpers (11) verlaufen,
jeder Fluideinlassweg mit mehr als 0,5 mm² Querschnittsfläche zu sowohl dem Gaseinlassende (16) als auch dem entgegengesetzten Ende offen ist,
die Fluidauslasswege an beiden Enden der Durchlasswege geschlossen sind,
die Einlasswege und die Auslasswege durch eine einzelne poröse Wand (23) getrennt sind,
vom Motor erzeugter Abgasüberdruck das Fluid durch die poröse Filterwand (23) zwischen den Einlassund den Auslasswegen treibt,
das gefilterte Fluid innerhalb der Auslasswege frei mit den Auslassleitungskanälen senkrecht zum Filterkörper (11) korrespondiert,
das gefilterte Fluid den Filterkörper (11) durch die Leitungskanäle im Umfang des Körpers in einem Winkel zwischen 45 und 135 Grad zur Körpermittellinie in eine äußere Sammelzone verlässt,
die aus dem Fluid abzuscheidenden Partikel außerhalb des Filterkörpers (11) in der Partikelsammelzone (20) im entgegengesetzten Ende (17) des Fluideinlassendes (16) gesammelt werden.

## Revendications

1. Dispositif de filtration destiné à enlever les particules présentes dans un gaz d'échappement et comprenant
un corps (11) de filtre présentant plusieurs canaux longitudinaux s'étendant essentiellement en parallèle et définis par des parois poreuses (23) retenant les particules perméables au gaz,
une partie de ces canaux présentant un passage libre à chaque extrémité de chaque canal (21), l'autre partie étant fermée à chaque extrémité de chaque canal (22),
les canaux (22) à extrémités fermées étant combinés en groupes (25) dans chacun desquels les canaux communiquent librement les uns avec les autres et avec une surface extérieure ou un conduit de décharge du corps (11) de filtre par l'intermédiaire d'au moins un conduit qui traverse les parois des canaux (22) à extrémités fermées dudit groupe, **caractérisé en ce que**
plus de 100 passages parallèles au total s'étendant longitudinalement depuis l'extrémité (16) d'entrée de fluide jusqu'à l'extrémité opposée (17) du corps de filtre et
**en ce que** le corps de filtre est combiné avec un réservoir (20) dans lequel débouchent les extrémités de sortie (17) des canaux présentant des passages libres et est scellé à ce réservoir.

2. Dispositif de filtration selon la revendication 1, **caractérisé en ce que** ledit réservoir (20) est fermé.

3. Dispositif de filtration selon la revendication 1, **caractérisé en ce que** chaque canal présente une section transversale en triangle, en quadrilatère, en carré, en rectangle, en hexagone ou en octogone.

4. Dispositif de filtration selon les revendications 1 ou 2, **caractérisé en ce que** le corps (11) de filtre présente en coupe transversale la forme d'un nid d'abeilles dont la densité de canaux ou de cellules est comprise entre 0,645 et environ 3 226 ccc (canaux ou cellules par centimètre carré) (entre 0,1 et 500 canaux ou cellules par pouce carré - cpsi) et de préférence entre 32,25 et 1 935 ccc (entre 50 et 300 canaux ou cellules par pouce carré - cpsi).

5. Dispositif de filtration selon l'une quelconque des revendications précédentes, **caractérisé en ce que** la porosité des parois (23) des canaux est comprise entre 10 et 90 % et de préférence entre 35 et 85 %.

6. Dispositif de filtration selon l'une quelconque des revendications précédentes, **caractérisé en ce que** l'épaisseur des parois (23) des canaux est comprise entre 0,2 et 15 mm et de préférence entre 0,2 et 2 mm.

7. Dispositif de filtration selon l'une quelconque des revendications précédentes, **caractérisé en ce que** la largeur de chaque canal est comprise entre 0,5 et 50 mm et de préférence entre 1 et 5 mm.

8. Dispositif de filtration selon l'une quelconque des revendications précédentes, **caractérisé en ce que** les groupes communiquant librement sont préparés avant de sécher le corps (11) de filtre extrudé.

9. Dispositif de filtration selon la revendication 1, **caractérisé en ce que** les groupes communiquant librement sont préparés après séchage du corps (11) de filtre extrudé.

10. Dispositif de filtration selon l'une quelconque des revendications précédentes, **caractérisé en ce que** le corps (11) de filtre est réalisé en céramiques non oxydes, par exemple le carbure de silicium ou le nitrure de silicium, facultativement combiné avec du silicium métallique.

11. Dispositif de filtration selon l'une quelconque des revendications 1 à 8, **caractérisé en ce que** le corps (11) de filtre est constitué de céramiques d'oxydes tels que la cordiérite, l'alumine, le titanate ou la mullite.

12. Dispositif de filtration selon l'une quelconque des revendications 1 à 6, **caractérisé en ce que** le corps (11) de filtre est réalisé en alliages métalliques, de préférence à base de fer et contenant facultativement du nickel, de l'aluminium, du chrome et/ou éventuellement des métaux de terres rares.

13. Dispositif de filtration selon l'une quelconque des revendications précédentes, **caractérisé en ce que** le corps (11) de filtre est combiné avec un cyclone.

14. Moteur à combustion interne doté d'au moins un dispositif de filtration selon l'une quelconque des revendications précédentes en vue d'éliminer la suie et autres particules de ses gaz d'échappement.

15. Moteur à combustion interne selon la revendication 14, dans lequel ledit moteur est un moteur diesel.

16. Véhicule doté d'un moteur à combustion interne selon l'une quelconque des revendications 14 ou 15.

17. Procédé de formation d'un filtre à gaz non connecteur pour gaz d'échappement de moteur diesel chargé de particules, pour séparer lesdites particules du gaz chargé de particules en séparant mécaniquement les particules en faisant passer le gaz chargé desdites particules à travers le corps (11) doté de parois poreuses (23) agencé dans un motif structurel qui comprend :
- des passages d'entrée de fluide et des passages de sortie de fluide,
- un ou plus d'un corps extrudé de matériaux céramiques poreux contenant plus de en tout 100 passages parallèles s'étendant longitudinalement depuis l'extrémité (16) d'entrée de fluide jusqu'à l'extrémité opposée du corps (11) du filtre,
- les passages d'entrée de fluide présentant tous une section transversale supérieure à 0,5 mm² étant ouverts à la fois à l'extrémité (16) d'entrée de gaz et à l'extrémité opposée,
- les passages de sortie de fluide étant fermés aux deux extrémités des passages,
- les passages d'entrée et les passages de sortie étant séparés par une unique paroi poreuse (23),
- la surpression d'échappement produite par le moteur entraînant le fluide à travers la paroi poreuse (23) de filtration entre les passages d'entrée et les passages de sortie,
- le fluide filtré correspondant librement à l'intérieur des passages de sortie avec des canaux de conduit de sortie perpendiculaires au corps (11) du filtre,
- le fluide filtré quittant le corps (11) du filtre à travers les canaux de conduit situés à la périphérie du corps, sous un angle compris entre 45 et 135 degrés par rapport à la ligne centrale du corps et jusque dans une zone de collecte extérieure et
- les particules à séparer du fluide étant recueillies à l'extérieur du corps (11) du filtre dans la zone (20) de collecte de particules situées à l'extrémité (17) opposée à l'extrémité (16) d'entrée de fluide.
